# EUROPEAN PATENT APPLICATION

(11) **EP 4 102 347 A1**
(43) Date of publication of application: **14.12.2022**
(21) Application number: 21753248.0
(22) Date of filing: 02.02.2021
(51) Int. Cl.: G06F 3/0484

(54) **PICTURE TEXT PROCESSING METHOD AND APPARATUS, ELECTRONIC DEVICE, AND STORAGE MEDIUM**

(30) Priority: 11.02.2020 CN 202010086414
(71) Applicant: GUANGDONG OPPO MOBILE TELECOMMUNICATIONS CORP., LTD., Dongguan, Guangdong 523860 (CN)
(72) Inventor: MENG, Wanting, Dongguan, Guangdong 523860 (CN)
(74) Representative: Rossi, Ugo
(86) International application number: PCT/CN2021/074801
(87) International publication number: WO 2021/159992

(57) **Abstract**

A picture text processing method and apparatus, an electronic device, and a storage medium provided in the present application. A terminal obtains a user operation instruction carrying position information; according to the user operation instruction, identify, from a picture, a target text corresponding to the position information; display a text display interface on the picture in an overlapping manner, and display the target text on the text display interface. The terminal can directly display the text display interface on the picture in an overlapping manner, and display the target text on the text display interface without jumping to the next-stage display interface to display the text, so that hierarchical display is simpler, the user operation process is simplified, and a user operation time duration is shortened.

## Description

The application claims priority to a Chinese patent application No.2020100864146 filed in the China National Intellectual Property Administration on February 11, 2020, titled "PICTURE TEXT PROCESSING METHOD AND APPARATUS, ELECTRONIC DEVICE, AND STORAGE MEDIUM". The entire contents of the aforementioned application are incorporated herein by reference.

### TECHNICAL FIELD

The disclosure relates to the field of image recognition technologies, and more particularly, to a method and an apparatus for processing text in an image, an electronic device and a storage medium.

### BACKGROUND

Text has always played an important role in people's lives, and it is very important for vision-based applications owing to the text contains rich and precise information therein. Nowadays, more and more images contain text, and it requires to recognize the text in the images in many scenarios.

For example, in some applications, a user may click a "text recognition" button to extract text in an image as needed, and the terminal recognizes the text in the image (e.g., text-contained picture) and jumps from current page displaying the image to a next level page for displaying the recognized text. The user may perform operations, such as edit and copy, on the text displayed in the next level page.

### SUMMARY

Embodiments of the disclosure provides a method and an apparatus for processing text in an image, an electronic device, and a storage medium, which can simplify the user operation process and hierarchical complexity.

A method for processing text in an image, including operations as follows. A user operation instruction carrying location information is acquired, and the location information is configured to indicate an operation location of a user's operation performed on the image. Target text corresponding to the location information in the image is identified, according to the user operation instruction. A text display interface is displayed overlying on the image, and the target text is displayed on the text display interface.

An apparatus for processing text in an image includes an acquiring module, an identifying module and an identifying module. The acquiring module is configured to acquire a user operation instruction carrying location information; and the location information is configured to indicate an operation location of a user's operation performed on the image. The identifying module is configured to identify, according to the user operation instruction, target text corresponding to the location information in the image. The displaying module is configured to display a text display interface overlying on the image, and display the target text on the text display interface.

An electronic device includes a memory and a processor. The memory is stored with a computer program, and the computer program is configured to, when executed by the processor, cause the processor to implement the method for processing text in an image according to any one of method embodiments of processing text in an image.

A computer-readable medium is stored with a computer program. The computer program is configured to, when executed by a processor, implement the method for processing text in an image according to any one of method embodiments of processing text in an image.

### BRIEF DESCRIPTION OF THE DRAWINGS

In order to more clearly illustrate technical solutions in embodiments of the disclosure or in the related art, drawings used in the description of the embodiments or the related art will be briefly described below. Apparently, the drawings in the following description are merely some embodiments of the disclosure. For those skilled in the art, other drawings may also be obtained according to these drawings without paying any creative work.
FIG. 1 is an application environment diagram of a method for processing text in an image according to some embodiments;
FIG. 2 is a flowchart illustrating a method for processing text in an image according to some embodiments;
FIGS. 2a and 2b are schematic diagrams illustrating displaying of text in an image according to some embodiments, respectively;
FIG. 3 is a flowchart illustrating a method for processing text in an image according to some embodiments;
FIG. 4 is a flowchart illustrating a method for processing text in an image according to some embodiments;
FIG.5 is another schematic flowchart of a method for controlling a network connection according to an embodiment of the disclosure;
FIG. 6 is a flowchart illustrating a method for processing text in an image according to some embodiments;
FIG. 7 is a flowchart illustrating a method for processing text in an image according to some embodiments;
FIGS. 7a, 7b, 8, 9a, 9b and 9c are schematic diagrams illustrating displaying of text in an image according to some embodiments, respectively;
FIG. 10 is a schematic diagram illustrating an apparatus for processing text in an image according to some embodiments of the disclosure;
FIG. 11 is a schematic diagram illustrating an apparatus for processing text in an image according to some embodiments of the disclosure; and
FIG. 12 is a schematic diagram illustrating an electronic device according to some embodiments of the disclosure.

### DETAILED DESCRIPTION

In order to more clearly illustrate purposes, technical solution, advantages of the disclosure, the disclosure will be described in detail with reference to the drawings and embodiments. It should be understood that the detailed embodiments provided herein are only used to explain but not to limit the disclosure.

It should be understood that the terms "first," "second" and the like used in the disclosure are configured to describe various elements and components, but are not intended to limit these components. These terms are only used to distinguish a first element or component from another element or component. For example, without departing from the scope of the disclosure, a first client may be referred to as a second client, and similarly, the second client may be referred to as the first client. Both the first client and the second client are clients, but they are not the same client.

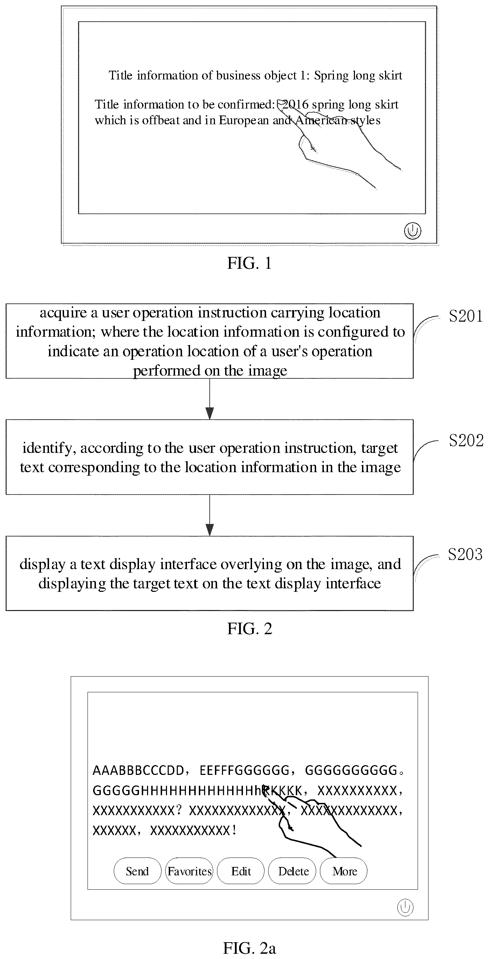

FIG.1 is an application environment diagram of a method for processing text in an image according to some embodiments. As illustrated in FIG. 1, the application environment includes a user and a terminal. The terminal displays an image to the user, and the user may perform an operation, such as a long press, a double click and a slide, on the image. In response to receiving the above operation from the user, the terminal recognizes text corresponding to an operation location in the image, and displays the text on a text display interface overlying on the image. The terminal may be a mobile phone, a computer, an iPad, a game console, etc., and the embodiments of the disclosure are not limited to these.

According to the embodiments of the disclosure, the method for processing text may be used to alleviate the problem of complex hierarchical display and the cumbersome user operation of the existing methods for extracting text in an image.

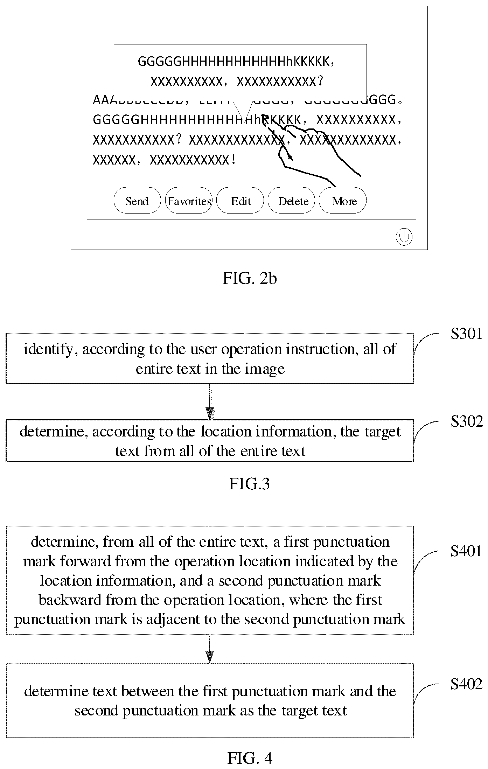

FIG. 2 is a flowchart illustrating a method for processing text in an image according to some embodiments. The method for processing text in an image of the embodiments is described by taking a case where the method is implemented on the terminal illustrated in FIG. 1. As illustrated in FIG.2, the method for processing text in an image includes the operations as follows.

At S201, a user operation instruction carrying location information is acquired; and the location information is configured to indicate an operation location of a user's operation performed on the image.

A user may input the user operation instruction in various ways. For example, the user may long press a location on the image, double click a location on the image, or perform a slide operation on the image, and the respective operation location may be the location on the image where the long press, the double click, or the slide are performed. The he embodiments of the disclosure are not limited to these. The user operation instruction is configured to instruct the terminal to identify text corresponding to the operation location on the image where the operation is performed by the user.

In the illustrated embodiments, when a user browses an image on a display interface of the terminal, in a case where the image contains text and the user needs to manipulate the text, the user may trigger the user operation instruction by inputting a long press, a double click or a slide operation, so as to instruct the terminal to recognize the text corresponding to the operation position.

At S202, target text corresponding to the location information in the image is identified, according to the user operation instruction.

The target text may be a sentence of text, a paragraph of text, or even entire text in the image, which are not limited in the embodiments of the disclosure.

In the illustrated embodiments, in response to acquiring the user operation instruction, the terminal starts to identify the target text corresponding to the location information in the image. The terminal may identify the entire text in the image and then determine, from the entire text, the target text corresponding to the operation location. Alternatively, the terminal may first crop, according to the location information, a portion of the image to obtain a small image, and then identify text in the cropped small image, and determine, from the identified text in the small image, the text corresponding to the user's operation location.

In the illustrated embodiments, the target text corresponding to the location information may be text determined after extending forward and backward from the operation location indicated by the location information, for example, a sentence of text, a paragraph of text, etc., extending forward and backward from the operation location is determined as the target text. In at least one alternative implementation, the operation location is taken as a center and then a target area is formed by extending with a certain size(s) upwards and/or downwards while the width of the image taken as left and right boundaries of the target area, and a sentence or a paragraph with complete statement in the target area is taken as the target text. In at least one alternative implementation, a sentence between two punctuation marks respectively located immediately backward and forward from the operation location corresponding to the location information may be taken as the target text. The embodiments of the disclosure are not limited to these implementations.

At S203, a text display interface is displayed overlying on the image, and the target text is displayed on the text display interface.

In the illustrated embodiments, after the terminal has identified the target text, the text display interface is displayed overlying on the image, and the target text is displayed on the text display interface. The text display interface may a pre-generated display interface, which may be invoked directly to display the target text when the terminal has recognized the target text. Alternatively, when the terminal has recognized the target text, the terminal may generate a text display interface in real time, and display the text display interface overlying on the image to display the target text, which is not limited in the embodiments of the disclosure. The size of the text display interface may be preset, or be determined according to the size of the target text, which are not limited in the embodiments of the disclosure.

In addition, the text displayed on the text display interface is editable. For example, the user may perform operations, such as copy, share and edit, at the text displayed on the text display interface.

As illustrated in FIG. 2a, an image is displayed on a display interface of a terminal. To manipulate some text in the image as needed, a user may long press a location corresponding to the text on the image by finger. As illustrated in FIG. 2b, a user operation instruction is triggered in response to detecting a long press performed at the corresponding location on the text display interface by the user, where the user operation instruction records the location information of the user's long press. The terminal identifies a corresponding target text according to the location information, displays a text display interface overlying on the image, and displays the recognized target text on the text display interface.

In the method for processing text in an image according to embodiments of the disclosure, the terminal acquires the user operation instruction carrying location information, identifies, according to the user operation instruction, the target text corresponding to the location information in the image, displays the text display interface overlying on the image, and displays the target text on the text display interface. When the user needs to manipulate the text in the image, the user may trigger the user operation instruction at the corresponding location on the image, and the terminal identifies the target text corresponding to the operation location, and may directly display the text display interface overlying on the image, and display the target text on the text display interface. In this case, it is not required to jump to a next level display interface for displaying the text, thereby simplifying the display hierarchies. In addition, the user may directly manipulate the target text displayed on the text display interface without jumping to the next level display interface to manipulate the target text, thereby simplifying the user operation process. Furthermore, in response to detecting the user operates at the location corresponding to the needed text on the image, the terminal identifies the target text corresponding to the operation location and displays the target text on the text display interface. As such, the terminal is not required to display the entire text in the image, thereby reducing the load for displaying the text on the terminal. Furthermore, the user may directly manipulate the needed text without searching, as the existing technologies, the needed text in all of the text, thereby reducing the time needed for the user operation.

In the embodiments illustrated in FIG. 2, the terminal may identify the target text in various manners. The different manners for identifying the target text are described as follows, respectively.

FIG.3 is a schematic flowchart of a method for processing text in an image according to the embodiments of the disclosure. The embodiments of the disclosure relate to a specific implementation process in which the terminal recognizes the entire text in the image, and then determines the target text from the entire text according to the location information. As illustrated in FIG. 3, the method includes operations as follows.

At S301, entire text in the image is identified, according to the user operation instruction.

In the embodiments, when the terminal has acquired the user operation instruction, the terminal identifies the entire text in the image. The terminal may adopt the technology of optical character recognition (OCR) to identify the text in the image, or use a neural network algorithm to identify the text in the image, which are not limited in the embodiments of the disclosure.

At S302, the target text is determined from the entire text according to the location information.

In the illustrated embodiments, the terminal requires to determine the target text from the entire text according to the location information, that is, the target text is determined from the entire text according to the user's operation location. The target text may be determined by taking one sentence as unit, for example, one sentence formed by an operation location extension as per semantic extension, is determined as the target text. Alternatively, the target text may be determined by taking one paragraph as unit, for example, one paragraph formed by an operation location extension as per semantic extension, is determined as the target text. The embodiments of the disclosure are not limited to these.

In the method for processing text in an image according to the embodiments, the terminal first identifies the entire text in the image according to the user operation instruction, and then determines the target text from the entire text according to the location information. The location information and semantic information may be combined to identify the target text precisely, so as to avoid problems such as incomplete statement and sentence fragment, and improve the accuracy of text recognition.

In an embodiment, as illustrated in FIG. 4, the block S302 "the target text is determined from the entire text according to the location information" may include blocks as follows.

At S401, a first punctuation mark is determined from the entire text forward from the operation location indicated by the location information, and a second punctuation mark is determined from the entire text backward from the operation location, where the first punctuation mark is adjacent to the second punctuation mark.

In the embodiments, the terminal may determine the first punctuation mark after extending, according to the semantic direction, forward from the operation location, and determine the second punctuation mark after extending, according to the semantic direction, backward from the operation location. As illustrated in FIG. 2a, a full stop "∘ " at the end of the first line of the text is determined as the first punctuation mark, and a first comma "," at the second line of the text is determined as the second punctuation mark, by extending, according to the semantics, from the location where the user's finger long presses.

In at least one alternative embodiment, the first punctuation mark is the first particular punctuation mark which is immediately forward from the operation location, and the second punctuation mark is the first punctuation mark which is immediately backward from the operation location. In the illustrated embodiments, the punctuation marks may be determined according to semantic information. That is, a punctuation mark before or after a sentence with complete statement is determined as the particular punctuation mark, so as to determine the sentence with complete statement as the target text. For example, the particular punctuation mark may be a full stop, a question mark, an exclamation point, etc., and the embodiments of the disclosure are not limited to these. As illustrated in FIG. 2b, after extending, according to the semantics, from the location where the user's finger long presses, a full stop "∘ " at the end of the first line of the text is determined as the first punctuation mark, and a first question mark "?" at the third line of the text is determined as the second punctuation mark.

At S402, text between the first punctuation mark and the second punctuation mark is determined as the target text.

In the embodiments, the terminal determines text between two adjacent punctuation marks as the target text. For example, the text "GGGGGGHHHHHHHHHHHHHHHKKKKK," illustrated in FIG. 2a is determined as the target text. Alternatively, the text between two adjacent particular punctuation marks is determined as the target text. As illustrated in FIG. 2b, the text "GGGGGGHHHHHHHHHHHhKKKKK, XXXXXXXXXXXXX, XXXXXXXXXXXX?" is determined as the target text.

In the method for processing text in an image according to the embodiments of the disclosure, the terminal determines, from the entire text, a first punctuation mark forward from the operation location indicated by the location information, and determines, from the entire text, a second punctuation mark backward from the operation location. The terminal determines text between the first punctuation mark and the second punctuation mark as the target text. As such, the punctuation mark is used to identify the target text quickly and precisely.

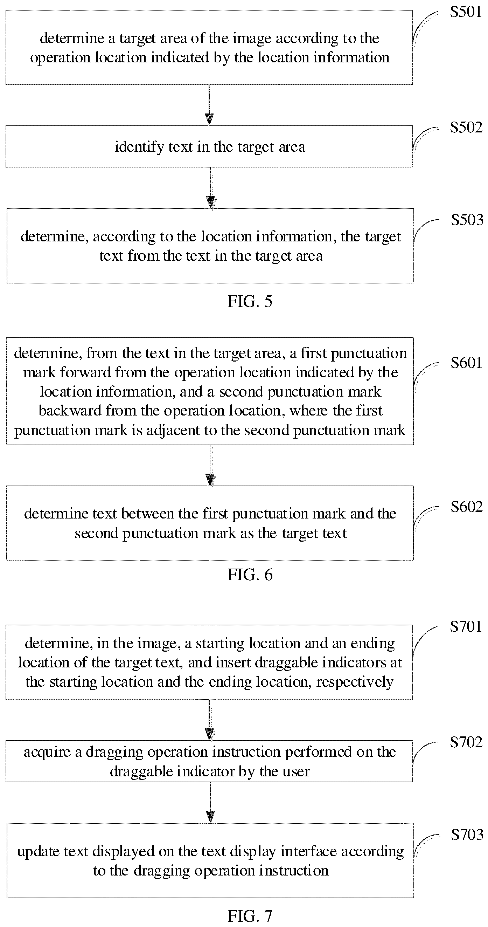

FIG.5 is a schematic flowchart of another method for processing text in an image according to an embodiment of the disclosure. The illustrated embodiments of the disclosure relate to a specific implementation process in which the terminal determines a target area of the image according to the operation location, identifies text in the target area, and determines the target text from the text in the target area. As illustrated in FIG. 5, the method includes operations as follows.

At S501, a target area of the image is determined according to the operation location indicated by the location information.

In the embodiments, the terminal may determine a target area of the image according to the operation location indicated by the location information. For example, a rectangular box is formed with the operation location as a center, and a predetermined length, e.g., the width of the image, as the width of the rectangular box, and the rectangular box is determined as the target area.

At S502, text in the target area is identified.

In the illustrated embodiments of the disclosure, when the target area on the image has been determined, the terminal may directly identify the text in the target area of the image. Alternatively, when the target area has been determined, the terminal may crop the target area from the image, and then identify the text in the cropped target area. Text in the image is not recognized except for the text in the target area. In at least one alternative embodiment, the terminal may adopt the technology of OCR to identify the text in the image, or use a neural network algorithm to identify the text in the image. The embodiments of the disclosure are not limited to these.

At S503, the target text is determined from the text in the target area, according to the location information.

In the illustrated embodiments, the terminal requires to determine the target text from the entire text according to the location information, that is, the target text is determined from the entire text according to the user's operation location. The target text may be determined by taking one sentence as unit, for example, one sentence formed by an operation location extension as per semantic extension, is determined as the target text. Alternatively, the target text may be determined by taking one paragraph as unit, for example, one paragraph formed by an operation location extension as per semantic extension, is determined as the target text. The embodiments of the disclosure are not limited to these.

In the illustrated embodiments, the terminal requires to determine, according to the location information, the target text from the text in the target area. In other words, the target text is determined, according to the user's operation location, from the text in the target area. The target text may be determined by taking one sentence as unit, for example, one sentence formed by an operation location extension as per semantic extension, is determined as the target text. Alternatively, the target text may be determined by taking one paragraph as unit, for example, one paragraph formed by an operation location extension as per semantic extension, is determined as the target text. The embodiments of the disclosure are not limited to these.

In some embodiments, as illustrated in FIG. 6, the block S503 "the target text is determined from the text in the target area according to the location information" may include blocks as follows.

At S601, a first punctuation mark forward from the operation location indicated by the location information is determined from the text in the target area, and a second punctuation mark backward from the operation location is determined from the text in the target area, where the first punctuation mark is adjacent to the second punctuation mark.

At S602, text between the first punctuation mark and the second punctuation mark is determined as the target text.

In at least one alternative embodiment, the first punctuation mark is the first particular punctuation mark immediately forward from the operation location, and the second punctuation mark is the first punctuation mark immediately backward from the operation location.

In the embodiments of the disclosure, the implementation principles and beneficial effect of blocks S601 and S602 may refer to that of blocks S401 and S402 of FIG.4. Details are not repeated herein.

In the method for processing text in an image according to the embodiments of the disclosure, the terminal determines the target area of the image according to the operation location indicated by the location information, recognizes text in the target area, and determines, according to the location information, the target text from the text in the target area. As such, the terminal requires to identify the text in the target area rather than the entire text in the image, thereby reducing the terminal load for text recognition.

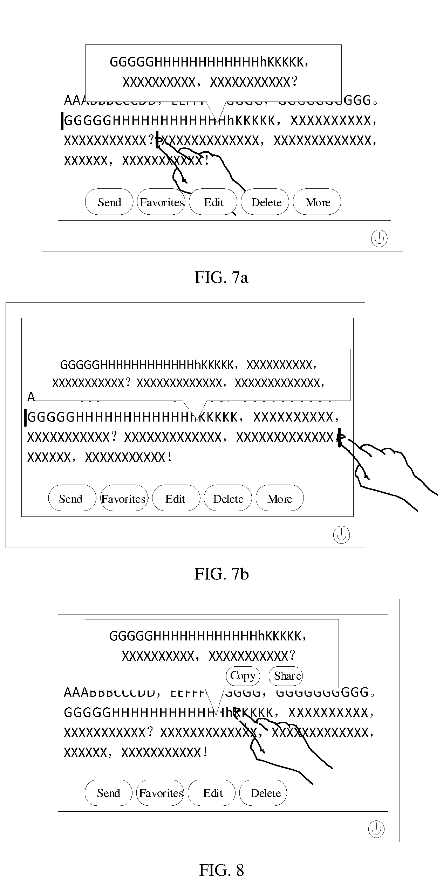

In some embodiments, in order to facilitate the user to select the needed text, the terminal may further insert a draggable indicator in the text in the image. As illustrated in FIG. 7, the above method for processing text in an image further includes blocks as follows.

At S701, a starting location and an ending location of the target text are determined in the image, and draggable indicators are inserted at the starting location and the ending location, respectively.

In the embodiments, in response to determining the target text, the terminal may insert the draggable indicators at the starting location and the ending location of the target text in the image. A user may drag the draggable indicator to select the text needed for the user. As illustrated in FIG. 7a, two draggable indicators in cursor shapes are inserted at the starting location and the ending location of the target text. To select the needed text, the user may drag the draggable indicator at the starting location or the draggable indicator at the ending location on the display interface of the terminal.

At S702, a dragging operation instruction performed on the draggable indicator by the user is acquired.

In the embodiments, in response to detecting an operation performed on the draggable indicator by the user, a dragging operation instruction may be trigger. As illustrated in FIG. 7b, a user may drag the draggable indicator from the ending location of the target text to the end of the third line of the text, and in response to detecting the user has finished the drag operation, the dragging operation instruction is generated.

At S703, text displayed on the text display interface is updated, according to the dragging operation instruction.

In the embodiments, the terminal may acquire the text between two draggable indicators according to the dragging operation instruction, determine such text as new target text, and display the new target text on the text display interface.

In at least one alternative embodiment, the block S703 may include operations as follows. The locations of the respective draggable indicators are determined according to the dragging operation instruction; the text information between the locations of the respective draggable indicators is identified in the image, and the text information is taken as the updated target text; and the updated target text is displayed on the text display interface.

In the embodiments, the terminal acquires the locations of the two draggable indicators according to the dragging operation instruction, identifies the text information between the locations of the two draggable indicators in the image, and takes the text information as the updated target text. As illustrated in FIG. 7b, the text between two draggable indicators is "GGGGGHHHHHHHHHHHHhKKKKK, XXXXXXXXXX, XXXXXXXXXXX? XXXXXXXXXXXXX, XXXXXXXXXXXXX,", and the terminal takes the text "GGGGGHHHHHHHHHHHHhKKKKK , XXXXXXXXXX , XXXXXXXXXXX ? XXXXXXXXXXXXX, XXXXXXXXXXXXX," as the updated target text and displays such text in a text display area.

In some alternative embodiments, a size of the text display interface is directly proportional to a size of the target text.

In the illustrated embodiments, the size of the text display interface is directly proportional to the size of the target text. In other words, the terminal may adjust the size of the text display interface according to the size of the target text, alternatively, the terminal may adjust the size of the target text according to the size of the text display interface. As such, the proportion of the text display interface is aesthetic and harmonious.

In the method for processing text in an image according to the embodiments of the disclosure, the terminal determines the starting location and the ending location of the target text in the text, and inserts the draggable indicators at the starting location and the ending location, respectively. In response to acquiring the dragging operation instruction performed on the draggable indicator by the user, the terminal updates, the text displayed on the text display interface according to the dragging operation instruction. When the user requires to update the target text, the user may drag the draggable indicator to select the text as needed. As such, the terminal can accurately identify the text information needed by the user, and it is easy and convenient for the user to operate, which greatly satisfies the user requirements. In addition, it avoids the terminal from switching pages between different hierarchies, and the operation hierarchy is simple.

In some embodiments, a number of controls may be set on the text display interface, so as to enable the configuration of the target text and the text display interface. In some alternative embodiments, the text display interface is provided with an operation control, and the method further includes: performing, in response to detecting the operation control is triggered, a target operation corresponding to the operation control on the target text.

In the illustrated embodiments, the text display interface may be provided with the operation control, so as to enable various manipulations on the target text. As illustrated in FIG. 8, the text display interface is provided with a copy control and a share control. The target operation corresponding to the copy control is a copy operation, and the target operation corresponding to the share control is a share operation. For example, in response to detecting a click performed at the copy control by the user, the terminal copies the target text displayed on the text display interface; and in response to detecting a click performed at the share control by the user, the terminal shares the target text displayed on the text display interface to an application or page which are specified by the user. Other operation controls may be further provided in accordance with requirements, which are not limited in the embodiments of the disclosure.

In some embodiments, the text display interface is provided with a function control, and the method for processing text in an image further includes: setting, in response to detecting the function control is triggered, at least one of a property of the target text and a property of the text display interface. The property of the target text includes at least one of a font size, a font format, and a font color of the target text. The property of the text display interface includes at least one of a background pattern, a background color, a shape, a size, and a location of the text display interface.

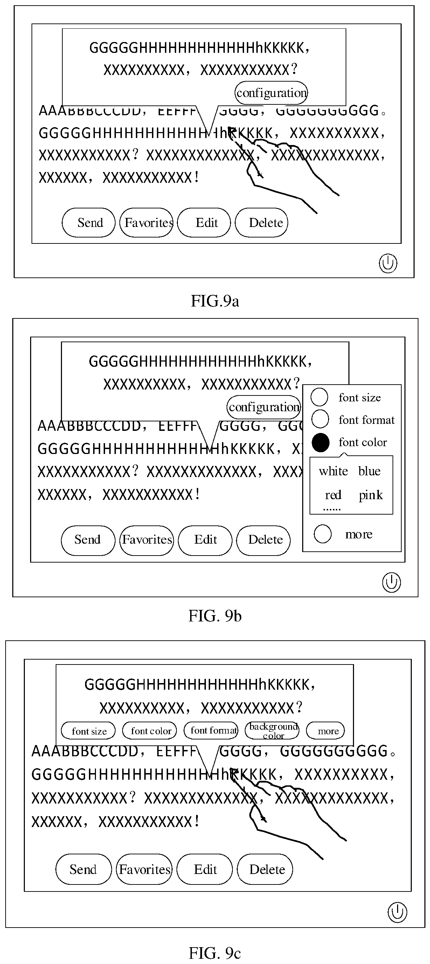

In the illustrated embodiments, as illustrated in FIG. 9a, a function control "configuration" may be provided on the text display interface. In response to detecting a click at the function control by the user, a setting interface is popped up as illustrated in FIG. 9b. The setting interface may include setting options such as font size, font format, font color, and background pattern, background color, shape, size, location of the text display interface. A user may set the properties of the target text and the properties of the text display interface on this setting interface. Alternatively, as illustrated in FIG. 9c, the text display interface may be directly provided with a number of function controls, such as font size, font format, font color, background pattern, background color, shape, size, and location. A user may manipulate the function control corresponding to the content required to be set.

In the method for processing text in an image according to the embodiments of the disclosure, the text display interface is provided with the operation control; in response to detecting the operation control is triggered, the target operation corresponding to the operation control is performed on the target text; and/or the text display interface is provided with the function control, in response to detecting the function control is triggered, at least one of the property of the target text and the property of the text display interface are set. As such, it is convenient for the user to set the property of the target text or the property of the text display interface, thereby satisfying different user requirements.

In some scenarios, in order to satisfy user requirements, it may further enable the user to drag the text display interface directly. In some alternative embodiments, the method for processing text in an image may further includes: a movement operation instruction input by the user is received; where the movement operation instruction includes a movement track; and the text display interface is moved according to the movement track.

In the illustrated embodiments, the user may drag the text display interface directly, the terminal records the user's movement track, and moves the text display interface according to the movement track, thereby satisfying the user requirements. In some implementations, the user may move the text display interface to any area of the display interface, for example, the text display interface may be dragged up or down, or the text display interface may be dragged to an area of the image without text. The embodiments of the disclosure are not limited to these.

It should be understood that, although the operations of the flow chart in FIGS. 2-7 are indicated sequentially by arrows, but the operations are not necessarily executed in the order indicated by the arrows. Unless it is specifically stated in the disclosure, the operations are not restricted strictly by the order, and the operations may be executed in other orders. Moreover, at least a part of the operations in FIGS. 2-7 may include several sub-operations or several stages, the sub-operations or stages are not necessarily executed at the same time, but may be executed at a different time. The execution order of these sub-operations or stages is not necessarily performed sequentially, and may be executed alternately or alternately with at least a part of other operations or sub-operations or stages of other operations.

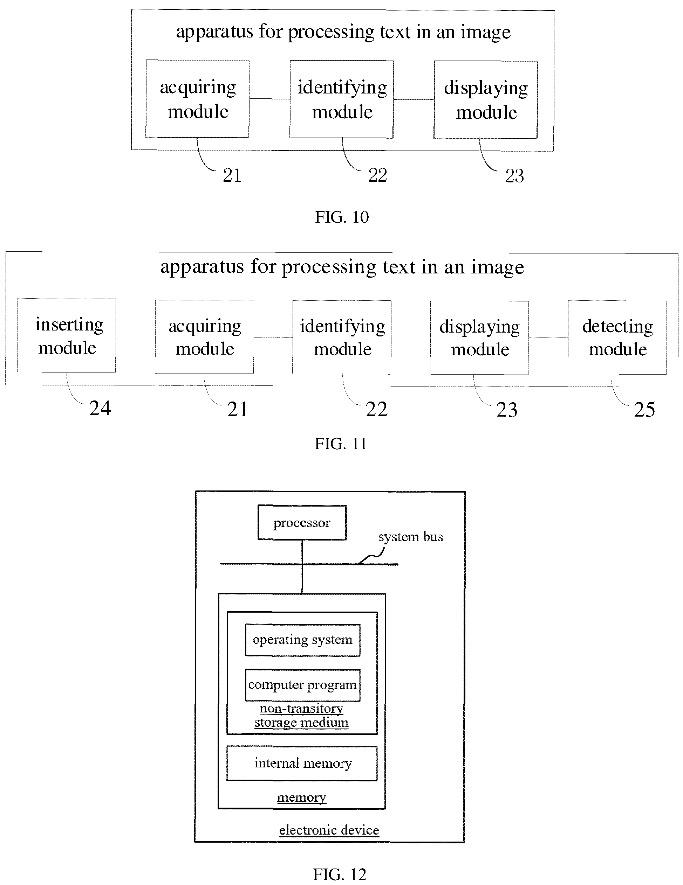

FIG. 10 is a schematic diagram illustrating an apparatus for processing text in an image according to some embodiments. As illustrated in FIG. 10, the apparatus includes an acquiring module 21, an identifying module 22, and a displaying module 23.

The acquiring module 21 is configured to acquire a user operation instruction carrying location information; where the location information is configured to indicate an operation location of a user's operation performed on the image. The identifying module 22 is configured to identify, according to the user operation instruction, target text corresponding to the location information in the image. The displaying module 23 is configured to display a text display interface overlying on the image, and display the target text on the text display interface.

In some embodiments, the identifying module 22 is further configured to identify entire text in the image according to the user operation instruction; and determine, according to the location information, the target text from the entire text.

In some embodiments, the identifying module 22 is further configured to determine, from the entire text, a first punctuation mark forward from the operation location indicated by the location information, and a second punctuation mark backward from the operation location, where the first punctuation mark is adjacent to the second punctuation mark; and determine text between the first punctuation mark and the second punctuation mark as the target text.

In some embodiments, the identifying module 22 is further configured to determine a target area of the image according to the operation location indicated by the location information; identify text in the target area; and determine, according to the location information, the target text from the text in the target area.

In some embodiments, the identifying module 22 is further configured to determining, from the text in the target area, a first punctuation mark forward from the operation location indicated by the location information, and a second punctuation mark backward from the operation location, where the first punctuation mark is adjacent to the second punctuation mark; and determine text between the first punctuation mark and the second punctuation mark as the target text.

In some embodiments, the first punctuation mark is the first particular punctuation mark immediately forward from the operation location, and the second punctuation mark is the first punctuation mark immediately backward from the operation location.

In some embodiments, as illustrated in FIG. 11, the apparatus further includes an inserting module 24. The inserting module 24 is configured to determine, in the image, a starting location and an ending location of the target text, and inserting draggable indicators at the starting location and the ending location, respectively. The acquiring module 21 is further configured to acquire a dragging operation instruction performed on the draggable indicator by the user. The displaying module 23 is further configured to update text displayed on the text display interface according to the dragging operation instruction.

In some embodiments, the displaying module 23 is further configured to determine locations of the two respective draggable indicators according to the dragging operation instruction; identify, in the image, text information between the locations of the respective draggable indicators, and take the text information as updated target text; and display the updated target text on the text display interface.

In some embodiments, as illustrated in FIG. 11, the apparatus further includes a detecting module 25. The detecting module 25 is configured to perform, in response to detecting the operation control is triggered, a target operation corresponding to the operation control on the target text.

In some embodiments, the target operation is a copy operation when the operation control is a copy control. The target operation is a share operation when the operation control is a share control.

In some embodiments, the detecting module 25 is further configured to set, in response to detecting a function control is triggered, at least one of a property of the target text and a property of the text display interface.

In some embodiments, the property of the target text includes at least one of a font size, a font format, and a font color of the target text; and the property of the text display interface includes at least one of a background pattern, a background color, a shape, a size, and a location of the text display interface.

In some embodiments, a size of the text display interface is directly proportional to a size of the target text.

In some embodiments, the displaying module 23 is further configured to receive a movement operation instruction input by the user; where the movement operation instruction includes a movement track; and move the text display interface according to the movement track.

The implementation principles and beneficial effect of the apparatus of processing text in an image according to the embodiments of the disclosure may refer to that of the method embodiments. Details are not repeated herein.

The distinction between the various modules in the above apparatus of processing text in an image is for illustration only. In other embodiments, the apparatus of processing text in an image may be divided into different modules as required to complete all or part of functions of the above apparatus of processing text in an image.

For the specific limitation of the apparatus of processing text in an image, reference may be made to the foregoing description on the method for processing text in an image, and details are not described herein again.

Each module in the above apparatus of processing text in an image may be implemented in whole or in part by software, hardware, and a combination thereof.

The above-mentioned modules may be embedded in the hardware form or independent of the processor in the computer device, or may be stored in the memory of the computer device in the form of software, so that the processor calls and performs the operations corresponding to the above modules.

FIG. 12 is a block diagram illustrating an internal structure of an electronic device according to some embodiments. As illustrated in FIG. 12, the electronic device includes a processor and a memory coupled to a system bus. The processor is configured to provide computing and control capabilities to support the operation of the entire electronic device. The memory may include a non-transitory storage medium and an internal memory. The non-transitory storage medium stores an operating system and a computer program. The computer program may be executed by the processor for implementing method for processing text in the image according to the various embodiments. The internal memory provides a cached operating environment for the operating system and the computer program in non-volatile storage medium. The electronic device may be a mobile phone, a tablet computer, a personal digital assistant or a wearable device, etc. The electronic device may be any terminal device including a mobile phone, a tablet computer, a personal digital assistant (PDA), a point of sales (POS), a vehicle-mounted computer, a wearable device, etc.

Each module in the apparatus for processing text in an image according to any of embodiments of the disclosure may be implemented in the form of the computer program. The computer program may be operated on a terminal or a server. The program module formed by the computer program may be stored on the memory of the electronic device. When the computer program is executed by the processor, the blocks of the method described in the embodiments of the disclosure are implemented.

Embodiments of the disclosure further provide a computer readable storage medium. One or more non-volatile computer readable storage mediums include computer executable instructions. The computer executable instructions are configured to, when executed by one or more processors, cause the processor to implement the method for processing text in an image.

A computer program product includes instructions. When the instructions are implemented on a computer, the computer is caused to perform the above method for processing text in the image.

Any reference to a memory, storage, database, or other medium used herein can include a non-transitory and/or transitory memory. The non-transitory memory may include a read-only memory (ROM), a programmable ROM (PROM), an electrically programmable ROM (EPROM), an electrically erasable programmable ROM (EEPROM), or a flash memory. The transitory memory may include a random-access memory (RAM), which acts as an external cache. For illustration rather than limitation, the RAM is available in a variety of forms, such as a static RAM (SRAM), a dynamic RAM (DRAM), a synchronous DRAM (SDRAM), a double data rate SDRAM (DDR SDRAM), an enhanced SDRAM (ESDRAM), a synchronization link DRAM (SLDRAM), a Rambus direct RAM (RDRAM), a direct Rambus dynamic RAM (DRDRAM), and a Rambus dynamic RAM (RDRAM).

The above embodiments only express several implementations of the disclosure, and the description thereof is relatively specific and detailed, but it cannot be interpreted as the limitation to the scope of the disclosure. It should be pointed out that for those skilled in the art, various variation and improvement can be made under the premise of not deviating from the concept of the disclosure, which all belong to the protection scope of the application. Therefore, the protection scope of the disclosure shall be subject to the attached claims.

## Claims

1. A method for processing text in an image, comprising:
acquiring a user operation instruction carrying location information; wherein the location information is configured to indicate an operation location of a user's operation performed on the image;
identifying, according to the user operation instruction, target text corresponding to the location information in the image; and
displaying a text display interface overlying on the image, and displaying the target text on the text display interface.

2. The method as claimed in claim 1, wherein the identifying, according to the user operation instruction, target text corresponding to the location information in the image, comprises:
identifying, according to the user operation instruction, an entire text in the image; and
determining, according to the location information, the target text from the entire text.

3. The method as claimed in claim 2, wherein the determining, according to the location information, the target text from the entire text, comprises:
determining, from the entire text, a first punctuation mark forward from the operation location indicated by the location information, and a second punctuation mark backward from the operation location, wherein the first punctuation mark is adjacent to the second punctuation mark; and
determining text between the first punctuation mark and the second punctuation mark as the target text.

4. The method as claimed in claim 1, wherein the identifying, according to the user operation instruction, target text corresponding to the location information in the image, comprises:
determining a target area of the image according to the operation location indicated by the location information;
identifying text in the target area; and
determining, according to the location information, the target text from the text in the target area.

5. The method as claimed in claim 4, wherein the determining, according to the location information, the target text from the text in the target area, comprises:
determining, from the text in the target area, a first punctuation mark forward from the operation location indicated by the location information, and a second punctuation mark backward from the operation location, wherein the first punctuation mark is adjacent to the second punctuation mark; and
determining text between the first punctuation mark and the second punctuation mark as the target text.

6. The method as claimed in claim 3 or 5, wherein the first punctuation mark is a particular punctuation mark immediately forward from the operation location, and the second punctuation mark is a punctuation mark immediately backward from the operation location.

7. The method as claimed in any one of claims 1-5, further comprising:
determining, in the image, a starting location and an ending location of the target text, and inserting draggable indicators at the starting location and the ending location, respectively;
acquiring a dragging operation instruction performed on the draggable indicator by the user; and
updating text displayed on the text display interface according to the dragging operation instruction.

8. The method as claimed in claim 7, wherein the updating text displayed on the text display interface according to the dragging operation instruction, comprises:
determining locations of the respective draggable indicators according to the dragging operation instruction;
identifying, in the image, text information between the locations of the respective draggable indicators, and taking the text information as updated target text; and
displaying the updated target text on the text display interface.

9. The method as claimed in any one of claims 1-5, wherein the text display interface is provided with an operation control, and the method further comprises:
performing, in response to detecting the operation control is triggered, a target operation corresponding to the operation control on the target text.

10. The method as claimed in claim 9, wherein the target operation is a copy operation when the operation control is a copy control;
the target operation is a share operation when the operation control is a share control.

11. The method as claimed in any one of claims 1-5, wherein the text display interface is provided with a function control, and the method further comprises:
setting, in response to detecting the function control is triggered, at least one of a property of the target text and a property of the text display interface.

12. The method as claimed in claim 11, wherein the property of the target text comprises at least one of a font size, a font format, and a font color of the target text; and
the property of the text display interface comprises at least one of a background pattern, a background color, a shape, a size, and a location of the text display interface.

13. The method as claimed in any one of claims 1-5, wherein a size of the text display interface is directly proportional to a size of the target text.

14. The method as claimed in any one of claims 1-5, further comprising:
receiving a movement operation instruction input by the user; wherein the movement operation instruction comprises a movement track; and
moving the text display interface according to the movement track.

15. An apparatus for processing text in an image, comprising:
an acquiring module, configured to acquire a user operation instruction carrying location information; wherein the location information is configured to indicate an operation location of a user's operation performed on the image;
an identifying module, configured to identify, according to the user operation instruction, target text corresponding to the location information in the image; and
a displaying module, configured to display a text display interface overlying on the image, and display the target text on the text display interface.

16. The apparatus as claimed in claim 15, wherein the identifying module is configured to:
identify entire text in the image according to the user operation instruction; and determine, according to the location information, the target text from the entire text.

17. The apparatus as claimed in claim 16, wherein the identifying module is configured to:
determine, from the entire text, a first punctuation mark forward from the operation location indicated by the location information, and a second punctuation mark backward from the operation location, wherein the first punctuation mark is adjacent to the second punctuation mark; and determine text between the first punctuation mark and the second punctuation mark as the target text.

18. The apparatus as claimed in claim 15, wherein the identifying module is configured to:
determine a target area of the image according to the operation location indicated by the location information; identify text in the target area; and determine, according to the location information, the target text from the text in the target area.

19. An electronic device, comprising a memory and a processor, wherein the memory is stored with a computer program, and the computer program is configured to, when executed by the processor, cause the processor to implement the method for processing text in an image as claimed in any one of claims 1-14.

20. A computer-readable medium stored with a computer program, wherein the computer program is configured to, when executed by a processor, implement the method for processing text in an image as claimed in any one of claims 1-14.
